# FASCICULE DE BREVET EUROPEEN

(11) **EP 1 459 955 B1**
(45) Date de publication et mention de la délivrance du brevet: **08.11.2006**
(21) Numéro de dépôt: 03405186.2
(22) Date de dépôt: 18.03.2003
(51) Int. Cl.: B62B 1/20, B62B 5/06, B62B 5/00

(54) **Dispositif de transport d'une charge et dispositif d'attache approprie**
Transportvorrichtung für eine Last und passende Befestigungsvorrichtung
Device for transporting a load and appropriate fastening device

(43) Date de publication de la demande: 22.09.2004
(73) Titulaire: Joncourt, François, 3084 Wabern (CH)
(72) Inventeur: Joncourt, François, 3084 Wabern (CH)
(74) Mandataire: Störzbach, Michael Andreas

(56) Documents cités:
- FR-A- 2 775 878
- GB-A- 2 206 317
- US-A- 4 664 395

## Description

La présente invention concerne un dispositif de transport d'une charge selon le préambule de la revendication indépendante 1. Un tel dispositif est connu de GB 2 206 317 A. Ce dispositif peut être tracté par un utilisateur, directement, c'est-à-dire par les mains de ce dernier (ou éventuellement être poussé de cette manière-là), ou indirectement, c'est-à-dire en étant relié à celui-ci par l'intermédiaire d'un dispositif d'attache approprié répondant à la revendication 14.

On sait qu'une personne portant des charges sur son dos - surtout lorsque ces ports sont fréquents et/ou prolongés et que, de surcroît, ces charges sont lourdes et/ou relativement volumineuses - s'expose, au moins à la longue, à des problèmes dorsaux plus ou moins graves et même à des lésions irréversibles. C'est la raison pour laquelle sont apparus sur le marché, d'une part, des valises intégrant un dispositif comprenant au moins une roulette et une poignée ou moyen similaire et, d'autre part, (domaine dans lequel se situe plus particulièrement la présente invention) des dispositifs de transport de charges plus spécialement conçus pour les randonneurs, tous ces dispositifs visant un but commun, à savoir celui de soulager le dos par réduction sensible des efforts à déployer pour le déplacement desdites charges.

Le problème central que pose le genre de dispositif dont s'agit réside dans le confort et l'agrément d'utilisation, alors que la construction du dispositif doit être simple et rationnelle et la fabrication peu coûteuse. Il est d'autant plus difficile à résoudre qu'il est polymorphe, en ce sens qu'il recèle une série de composantes constituant chacune un sous-problème, et qu'une solution partielle d'un sous-problème peut être rédhibitoire pour une solution partielle d'une autre composante du problème. Ainsi, à titre d'exemple, on sait que plus léger sera le châssis, plus aisés seront le maniement du dispositif, son port et sa traction. Mais d'un autre côté, il est essentiel que ledit châssis soit solide et rigide. Or, si un renforcement du châssis répond notamment aux buts de la solidité et de la rigidité, il entraîne une augmentation de son poids, tandis que le choix de certains matériaux légers confronte le fabricant au coût qui risque de devenir très vite dissuasif. A l'analyse, ces antagonismes sont subordonnés à une condition sine qua non pour un confort d'utilisation de qualité, savoir celle de l'équilibre et de la stabilité du dispositif lors de sa traction ou de tout autre type de maniement. Le souci d'un équilibre optimal (la stabilité en étant en fait une conséquence) est donc fondamental. En outre, l'utilisateur souhaite qu'un dispositif de ce genre soit aussi polyvalent que possible, c'est-à-dire utilisable aussi bien en terrain accidenté (chemins et sentiers plus ou moins pentus et difficilement ou non carrossables) qu'en terrain plat ou pourvu d'un revêtement (agglomérations, gares, etc.).
On conçoit aisément que ce problème de confort se pose également pour le dispositif d'attache, lorsque l'utilisateur y fait appel pour se relier au dispositif de transport pour le tracter. Aussi convient-il que ce dispositif d'attache soit ergonomique, pratique et d'un port agréable, tout en concourant au maintien de l'équilibre de l'ensemble. Cela sans sacrifier l'esthétique.

FR-A-2,775,878 divulgue un cadre formé de deux lattes longitudinales s'étendant symétriquement par rapport à un plan médian, d'une ou plusieurs traverses de renfort et d'une entretoise-support. Les extrémités inférieures sont rapprochées pour n'être écartées l'une de l'autre que d'une faible distance et sont reliées par un dispositif d'appui sur le sol, par exemple un arbre portant une roue dont le plan est compris dans ledit plan médian. Ces lattes s'ouvrent en direction des extrémités supérieures dont chacune porte une pièce d'appui destinée à venir contre les hanches du porteur, les deux pièces étant reliées entre elles par une ceinture.
Lors du transport, la charge repose sur l'entretoise-support, le porteur passant en tout état de cause les bretelles par ses épaules. Ces dernières sont ainsi libérées d'une grande partie du poids de la charge, celle-ci se répartissant sur la roue et les hanches. Mais l'avantage est estompé par un inconvénient notable, puisque ces hanches vont être continuellement soumises à une double sollicitation verticale (partie du poids de la charge reportée sur elles) et latérale (provoquée par le tangage du dispositif). Et une diminution de l'une des deux sollicitations, résultant du déplacement dans un plan horizontal de la charge, c'est-à-dire de la modification de l'emplacement de l'entretoise-support, entraînera une aggravation corrélative de l'autre sollicitation. De plus, les applications de ce dispositif sont extrêmement réduites, alors même que sa rigidité apparaît fort médiocre et que, surtout, sa stabilité et son équilibre, pour les raisons données plus loin, ne sont pas assurées.

US-4,664,395 divulgue un dispositif de transport de charges comprenant un chariot ou châssis-support et un harnais. Le châssis est formé de deux longerons et de plusieurs traverses et est pourvu d'une paire de béquilles repliables. Les longerons se rejoignent à leurs extrémités inférieures, à proximité desquelles est agencée une roue munie de freins. Le harnais se compose, d'une part, d'une paire de ceintures inférieure et supérieure disposées respectivement autour de la taille et du torse, et d'une paire de bretelles, et, d'autre part, d'une structure dorsale formée de deux tubes. Le harnais comporte en outre, notamment un étui ou plus généralement une fixation destinée à recevoir une manette de frein semblable à celle d'une bicyclette, cette manette étant reliée à la roue ou, plus précisément à un étrier portant les garnitures de frein, par un câble passant par-dessus l'épaule de l'utilisateur. A ladite structure dorsale sont reliées, d'une part, les deux ceintures précitées et, d'autre part, dans sa zone supérieure, les extrémités supérieures du châssis du dispositif de transport.
Notamment le harnais est passablement complexe et lourd, donc onéreux, mais aussi inesthétique, tandis que son port s'avère pour le moins malaisé, constituant davantage un carcan, à tel point que l'utilisateur aura vite fait de l'abandonner et, avec lui, tout le dispositif. Quant au dispositif de transport même, sa conception est telle qu'aussi bien son équilibre en phase de d'utilisation et sa rigidité sont insuffisants.

Ces deux antériorités partagent au moins une caractéristique commune - qui explique au moins pour partie le défaut de stabilité et d'équilibre des dispositifs sur lesquels elles portent - à savoir que les barres du châssis, reliées le cas échéant entre elles par au moins une traverse, s'étendent de part et d'autre d'un plan médian pour se rapprocher l'une de l'autre, par leurs extrémités inférieures, entre lesquelles est monté l'élément d'appui sur le sol.

Le problème formulé supra demeure donc entier, aussi bien pour ce qui concerne le dispositif de transport que le dispositif d'attache, lorsque ce dernier est prévu.

Le but de la présente invention est d'y apporter une solution véritablement efficace et optimale, et qui soit dans le même temps fort élégante et attrayante, palliant du coup les inconvénients affectant les dispositifs connus.

Ce but est atteint grâce aux moyens définis dans la revendication indépendante 1, les revendications dépendantes portant sur des réalisations particulières préférées et à bon prix.

Conception de ce dispositif de transport et, d'abord, traduction de ces concepts en moyens techniques à la fois efficaces et simples, ensuite, constituent l'aboutissement d'une analyse et d'une synthèse du cortège de conditions - notamment: équilibre et stabilité, légèreté et solidité, rigidité et maniabilité, polyvalence, coût et esthétique - devant toutes être remplies, car toutes inhérentes à l'objectif consistant à assurer un confort d'utilisation idéal. Grâce à sa structure, le dispositif de transport selon l'invention assure, notamment du fait du croisement des lignes de forces, lesquelles sont idéalement réparties, un équilibre optimal; il allie solidité et légèreté, rigidité et souplesse, efficacité et simplicité de fabrication, commodité d'utilisation et esthétique.

Quant au dispositif d'attache, sous forme de ceinture ou de harnais, il ajoute sa part au confort d'utilisation. En effet, sa liaison au dispositif de transport est située de telle sorte qu'un risque de basculement de ce dernier, même dans des situations entraînant une rotation ou un balancement du corps, est en principe écarté. De même, une tendance au balancement, c'est-à-dire à un mouvement d'avant en arrière lors de la marche, est quasiment annulé, ou pour le moins, l'amplitude d'un tel mouvement restera, dans le pire de cas, extrêmement limitée. En outre, le dispositif d'attache permettra à l'utilisateur, dans de nombreuses situations, de garder les mains libres, cela, à l'inverse des dispositifs connus. Bien entendu, lorsqu'il évolue en terrain à relief prononcé, l'utilisateur posera ses mains sur les poignées du dispositif, pour être prêt, à tout moment, à neutraliser une éventuelle force perturbatrice. Mais il n'éprouvera la moindre gêne pour ce faire, puisque l'exercice d'une légère impulsion vers le haut ou le bas sur les poignées du dispositif suffira. D'une part, la plus grande composante de la force créée par le poids de la charge transportée est supportée par l'élément d'appui sur le sol que comprend le dispositif de transport, tandis que l'autre composante de la force est sensiblement réduite (ce qui est commun à tous les dispositifs connus). D'autre part, et contrairement aux dispositifs usuels, cette force réduite, tout comme les composantes résiduelles d'éventuelles forces additionnelles provoquées par exemple par des chocs ou autres dénivellations subites de terrain, sont - conséquemment à la structure du dispositif, comme on l'a vu plus haut - réparties pratiquement à parts égales à gauche et à droite de l'utilisateur , et cela sur son bassin de celui-ci, donc sans que soit sollicitée sa colonne vertébrale.

Les dispositifs selon l'invention offrent ainsi une palette d'avantages qui se sont avérés lors des essais de prototypes. Il répond aux exigences les plus drastiques des randonneurs, mais s'adresse tout aussi bien à un très large public auquel il peut être offert à un prix relativement modique, tout en se distinguant par un indice qualité/ prix des plus avantageux.

On va décrire ci-après, à titre d'exemples non limitatifs, une première forme de réalisation du dispositif de transport, en mentionnant différentes variantes d'exécution, puis une deuxième forme de réalisation de ce dispositif, et, enfin, un exemple de réalisation du dispositif d'attache, cela à l'appui des dessins annexés où:
la figure 1 est une vue en perspective d'une première forme de réalisation du dispositif de transport,
la figure 2 est une vue partielle, en perspective, montrant une variante d'exécution du dispositif selon la figure 1,
la figure 2A représente en perspective une nacelle dont le dispositif de transport peut être équipé,
les figures 3, 4 et 5 sont des vues de profil, de dessus et de front, respectivement, du dispositif de transport selon la figure 1, avec une autre variante d'exécution,
la figure 6 est une vue analogue à celle de la figure 4, montrant une particularité du dispositif de transport,
les figures 7 et 8 montrent schématiquement des variantes du dispositif d'appui sur le sol que comprend le dispositif de transport,
les figures 9 et 10 représentent d'autres variantes d'exécution de la première forme de réalisation du dispositif,
la figure 11 représente une vue de dessus schématique d'une deuxième forme de réalisation du dispositif de transport,
la figure 12 est une représentation en perspective d'un exemple de réalisation du dispositif d'attache,
la figure 13 est une vue de profil montrant un utilisateur muni du dispositif d'attache auquel est relié le dispositif de transport et
la figure 14 est une vue de profil montrant l'utilisateur portant le dispositif de transport auquel est amarré une charge,
étant observé que l'échelle peut différer d'un dessin à l'autre, et que des éléments identiques ou semblables ou équivalents peuvent porter une même référence.

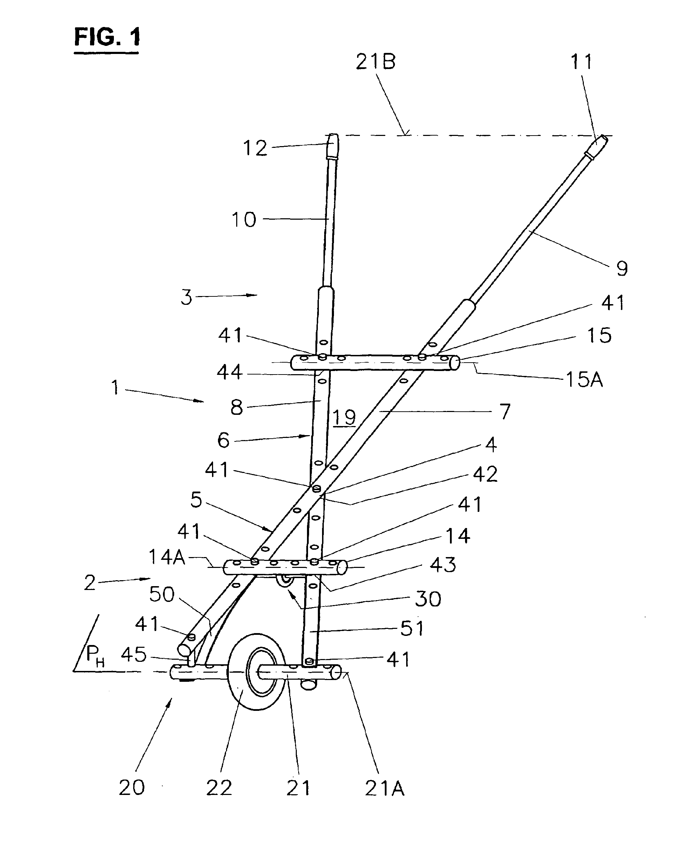

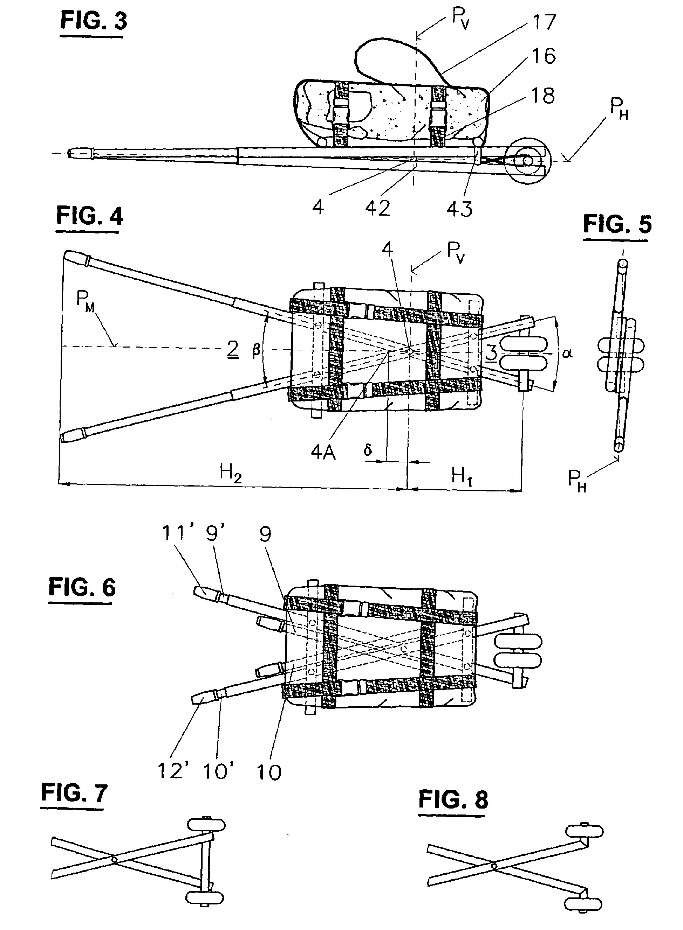

De manière générale (voir figures 1 à 4), le châssis du dispositif de transport 1, dénommé ci-après chariot 1 - projeté dans un plan P_{H} que l'on considérera par convention comme étant le plan le contenant globalement - se présente sous la forme générale d'une structure croisée pouvant se décomposer en une partie inférieure 2 et une partie supérieure 3, chacune en forme de V. Ces parties sont reliées entre elles dans une zone où les branches de chaque V se rejoignent ou se croisent, en l'occurrence en un point de croisement 4 constituant le sommet commun des deux V, tandis que le couple de branches de chaque V s'ouvre et s'étend à l'opposé l'un de l'autre (toujours dans ledit plan P_{H}), de part et d'autre d'un plan P_{V} orthogonal au plan P_{H}, pour former, selon l'exemple, un X asymétrique par rapport à ce dernier. Les dimensions des parties 2, 3, c'est-à-dire des V correspondants, sont définies par les hauteurs H₁ et H₂ (H₂ étant avantageusement plus grand que H₁), ainsi que par les angles α et β, ces deux angles étant avantageusement égaux entre eux (figure 4).

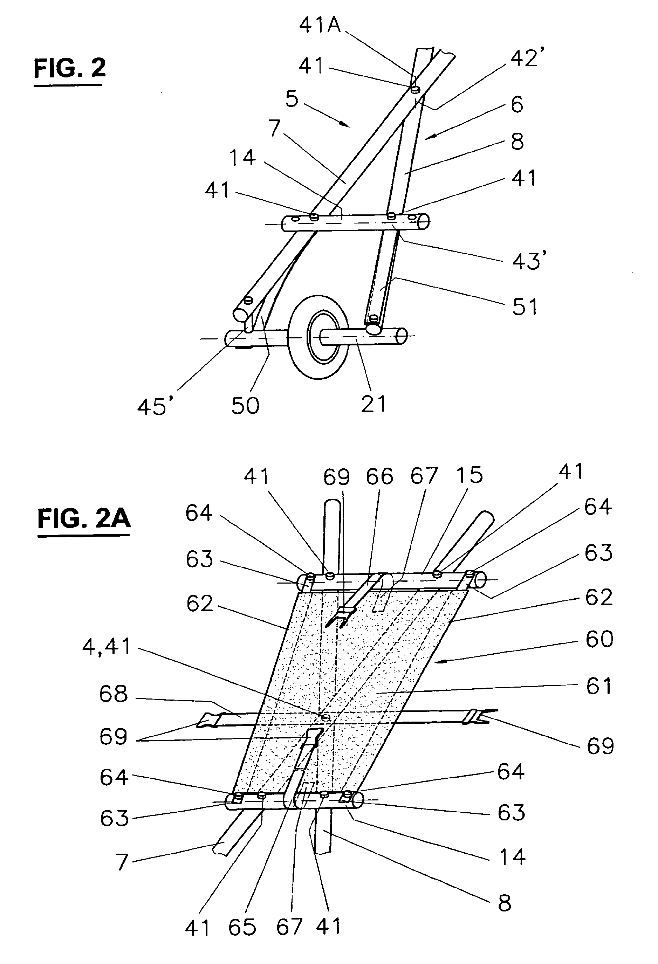

Plus particulièrement, selon une exécution préférée représentée en perspective aux figures 1 et 2 (voir aussi les différentes projections faisant l'objet des figures 3 et 4), le châssis du chariot 1, comprend deux longerons 5, 6 passant l'un par-dessus / par-dessous l'autre et reliés entre eux par un organe de fixation 41 dont l'axe 41A correspond au moins approximativement à la droite d'intersection du plan P_{V} avec un plan P_{M}, ce dernier étant un plan médian ou bissecteur des partie 2, 3. Cet axe 41A contient par définition le point 4, intersection des trois plans P_{H}, P_{V} et P_{M} et point de croisement, et, selon la construction, point de contact desdits longerons entre eux. Ces longerons sont de préférence composés de tubes 7, 8 et d'éléments télescopiques 9, 10 prolongeant de façon réglable les branches de la partie supérieure 3, dont les extrémités sont pourvues de poignées 11, 12. Ainsi, le chariot est indéformable, tandis que le moyen de liaison 41 d'axe 41A est soumis à un minimum de sollicitations, puisqu'en cet endroit de croisement, la structure est renforcée par la superposition des longerons qui absorbent les efforts.

Observons ici que tous les organes de fixation (par exemple systèmes vis-écrous) concernant le chariot 1 et dont il est fait mention dans la présente description sont, par souci de simplification, tous affectés de la même référence 41 (sauf autre spécification). Mais si toutes les vis peuvent présenter un seul et même diamètre, en revanche, elles n'ont pas toutes une longueur uniforme, cela pour des raisons de construction (nombre et dimensions des éléments à réunir) et fonctionnelles (respect de parallélismes), sur lesquelles on reviendra plus loin.

De part et d'autre du point 4, par rapport au plan Pᵥ, sont montées des traverses 14, 15, d'axe 14A, 15A respectivement, fixées aux tubes 7, 8 par des moyens de fixation 41. Ces traverses remplissent une double fonction, puisqu'elles permettent de rigidifier la structure et constituent dans le même temps, avec une portion des tubulures 7, 8 qu'elles délimitent qu'elles délimitent dans la zone de croisement, une assise ou aire de portance 19 pour une charge 16. [Nota: le terme délimiter n'est pas à entendre au sens strict; la charge peut bien entendu s'étendre au-delà des traverses 14, 15, ou au contraire n'occuper qu'une partie de l'aire 19]. Dans tous les cas, la charge prend place dans ladite zone de croisement des parties 2, 3,, particulièrement indéformable et rigide.

Dans les figures 3, 4 et 6, la charge 16 est matérialisée, dans les différentes figures par un sac à dos pourvu de sangles 17 et amarré au châssis au moyen de sangles 18 (voir notamment figure 3).

Selon une variante intéressante, la charge peut être fixée rapidement et aisément à la nacelle par un simple jeu de sangles croisées - voir figure 2A -. Les traverses 14, 15 permettent en effet l'agencement d'une nacelle de référence générale 60. Cette nacelle comporte une toile 61 en forme de trapèze, à bords renforcés 62 et pourvue, à ses quatre coins, de pattes 68 permettant sa fixation auxdites traverses par des organes de fixation 64. La charge peut être amarrée à la nacelle grâce à trois sangles. D'une part, des sangles 65, 66 sont fixées sur et sous la toile 61 par des pattes 67. Les sangles 65, 66 passe partiellement autour des traverses 14, 15 respectivement et sont disposées dans le sens du plan P_{M}. D'autre part, une sangle 68 s'étend dans le sens du plan P_{V}, donc orthogonalement aux sangles 65, 66, et est retenue au chariot 1 par l'organe de fixation 41 central. Cette sangle 68 passe donc sous la structure du chariot pour être rabattue autour des bords 62 de la toile 61. Les extrémités des sangles sont pourvues de boucles de serrage 69.

Dans la zone terminale de la partie inférieure 2 est agencé le dispositif d'appui sur le sol, de référence générale 20. Les extrémités des branches du V de cette partie 2 sont reliées entre elles par un élément-support 21 constitué d'un arbre d'axe 21A sur lequel est montée une roue 22, cet arbre s'étendant au-dessus du tube 8 et en-dessous du tube 7. Selon une variante représentée à la figure 2, l'arbre 21 s'étend au-dessous des deux tubes 7 et 8. Une barrette de protection et de renfort 50 s'étend sous une partie du tube 7, entre la traverse 14 et l'extrémité inférieure de ce tube, et passe également sous l'arbre 21. Elle est reliée au tube 7 et à l'arbre 21 par des moyens de fixation 41. Une barrette de protection et de renforcement 51 est disposée de manière analogue au-dessus d'une partie du tube 8, de la traverse 14 à l'extrémité inférieure de ce tube, et rejoint l'arbre 21 par le dessus. Elle est reliée à ce dernier et au tube 8 par des moyens de fixation 41. La barrette 51 procure également une meilleure esthétique dans l'hypothèse de l'agencement d'entretoise 43; 43' (figures 1 et 2, cf. infra).

Le dispositif d'appui 20 peut être exécuté selon différentes variantes. En particulier, on peut prévoir plus d'une roue, comme on l'aperçoit aux figures 3 à 8, où ce dispositif comporte deux roues, agencées, soit à l'intérieur des branches du V de la partie inférieure 2, (figures 3 à 6), soit à l'extérieur de ces branches (figures 7 et 8). Par ailleurs, en lieu et place de la ou des roues, il est possible de monter au moins un élément d'appui d'un autre genre, tel un patin de ski.

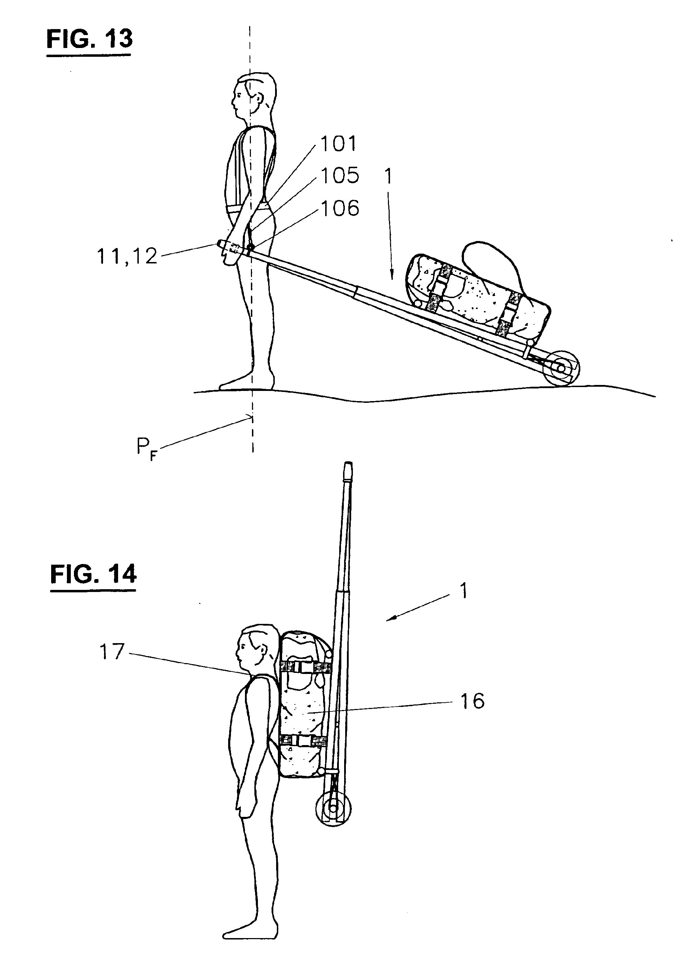

S'est également posée la question du meilleur emplacement géométrique du point de croisement 4. Cet emplacement procède en effet d'un compromis entre les souhaits, d'une part, d'éviter au maximum tout risque de basculement du chariot et, d'autre part, de délester au maximum également l'utilisateur du poids de la charge à transporter. En phase d'utilisation (comme cela est représenté à la figure 13) et en admettant que la charge 16 soit correctement amarrée, c'est-à-dire dans l'aire 19 (le cas échéant sur la nacelle 60) et avantageusement aussi bien concentrée que possible à et autour de l'endroit du croisement des longerons, la résultante de la force créée par ladite charge sera contenue dans le plan P_{M} et passera au moins à proximité du point 4, par exemple par un point 4A, à une distance δ du point 4. De nombreux essais ont montré qu'il est avantageux de choisir H₁ et H₂ de telle sorte que leur rapport H₁/H₂ se situe dans une fourchette de valeurs [0.25 - 0.35]. A titre d'exemple pratique, on peut prévoir environ 0.40 m 1.40 m pour H₁ et H₂ respectivement. Quant à la distance entre les poignées 11, 12 (segment de droite supporté par la droite 21B dont il sera question plus loin) de la partie supérieure 3, il va de soi qu'elle est définie en tout état de cause de manière telle que lesdites poignées se trouvent à droite et à gauche de l'utilisateur, dans la position montrée à la figure 13 et sans que celui-ci n'éprouve la moindre gêne (distance de l'ordre de 0.60 m, soit quelque peu supérieure à une moyenne de largeur du bassin). Selon une variante de construction des alésages supplémentaires sont prévus (voir figure 1, où ils sont schématisés, mais non référencés), de sorte à pouvoir adapter individuellement les paramètres H₁, H₂, α, β (en pratique, en application de l'exemple de données chiffrés ci-dessus, on aura pour les angles α, β, avec α = β, une valeur de l'ordre d'une vingtaine de degrés).

En vue d'un équilibre et d'un confort d'utilisation optimal, il convient qu'au moins e deux droites, à savoir une droite imaginaire 21B passant par les centres (non référencés) des extrémités de la partie supérieure 3 et l'axe 21A de l'arbre 21, demeurent parallèles, ces parallèles formant le plan P_{H} évoqué plus haut. Or, du fait de la disposition croisée des longerons du châssis, et eu égard aux caractéristiques et nombreuses variantes possibles de construction - hauteurs H₁, H₂, angles α et β, diamètres des tubes 7, 8, diamètre de l'arbre 21, disposition de ce dernier par rapport aux extrémités de la partie inférieure 2 des tubes 7, 8 (soit alternativement au-dessus et en-dessous de ces tubes, soit d'un même côté, en-dessous ou au-dessus d'eux) -, un défaut de parallélisme doit être établi ou rétabli par tous moyens appropriés. En l'occurrence, ces moyens sont constitués d'entretoises de tailles définies et adaptées, disposées chaque fois aux endroits adéquats où deux éléments donnés de la structure du châssis sont reliés entre eux, les dimensions de ces entretoises étant elles-mêmes fonction desdites caractéristiques et variantes de construction. L'effet de ces moyens est double, puisqu'outre le fait qu'ils permettent d'obtenir le parallélisme précité et contribuer ainsi à parfaire l'équilibre du chariot, ils rendent sensiblement plus aisé le montage de ce dernier. A titre d'illustration, sont référencées dans l'exemple représenté à la figures 1, des entretoises 42, 43, 44 et 45, intercalées entre les tubes 7 et 8, à l'endroit de leur croisement 4, entre le tube 8 et la traverse 14, entre le tube 8 et la traverse 15 et, enfin, entre le tube 7 et l'arbre 21, respectivement. De manière analogue, on trouve dans l'exemple représenté à la figure 2 des entretoises 42', 43', et 45'. Ces entretoises assurent dans le même temps un parallélisme entre les axes 14A et 15A des traverses 14, 15 respectivement.

De manière avantageuse, dans la forme d'exécution décrite, les éléments télescopiques 9, 11 peuvent être rangés dans l'aire de portance 19 (cf. figure 6), des éléments 9', 10' courts présentant des poignées 11', 12' pouvant être enfichés dans les extrémités supérieures des tubes 7, 8, en lieu et place desdits éléments télescopiques. Le chariot peut ainsi être utilisé avantageusement lors de voyages, dans les gares, en ville, etc..

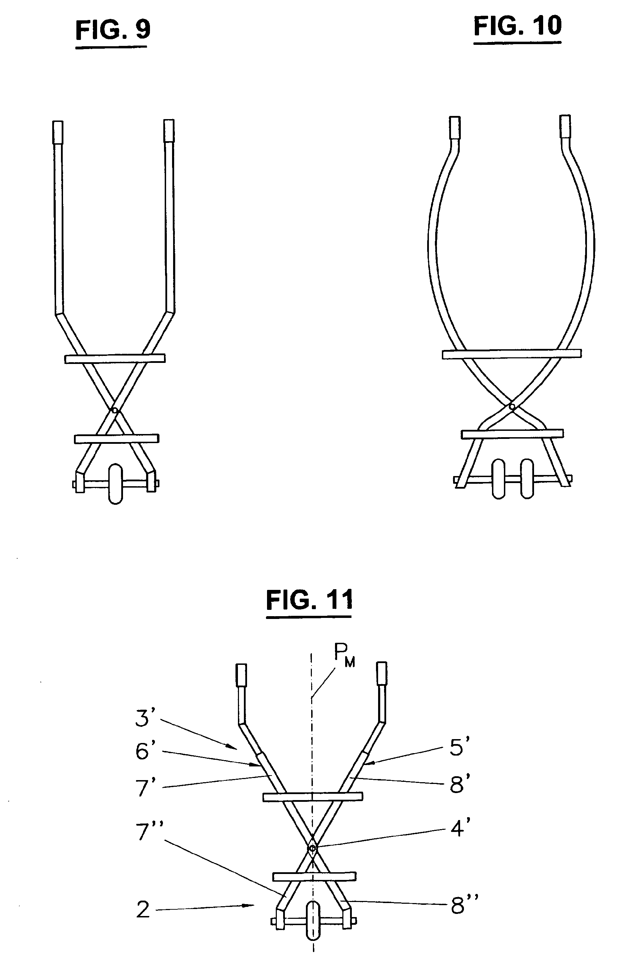

Au lieu d'être rectilignes, les branches d'au moins l'une des parties 2, 3 peuvent être, par exemple, brisées, courbes, etc. (cf. représentations très schématiques aux figures 9 et 10).

Selon une deuxième forme d'exécution montrée à la figure 11, les parties inférieure et supérieure 2', 3' présentent également une forme au moins approximative de V, mais les longerons 5', 6' sont de construction différente. En effet, chaque branche du V d'une partie (par exemple 7'), après avoir rejoint l'autre branche de la même partie (8'), pour y être reliée au point 4', s'ouvre à nouveau du même côté du plan médian de trace P_{M}, pour constituer la branche 7" du V de la partie inférieure 2'. De manière analogue, la branche 8' rejoint la branche 7' pour y être reliée, puis s' ouvre sur un tronçon 8". Cette construction s'inscrit dans le cadre de l'invention, mais est moins avantageuse que la forme d'exécution décrite plus haut, du fait d'une qualité de rigidité moindre et d'un risque d'usure prématurée de l'organe de liaison (non référencé) à prévoir en 4', cet organe étant soumis à des sollicitations (notamment torsion) plus importantes.

Le chariot 1 peut enfin être pourvu d'un dispositif de protection et de confort complémentaire 30 (voir figure 1). Ce dispositif 30 se compose, selon l'exemple, d'une roulette montée folle sur un arbre (non référencés). Cet arbre passe sous les tubes 7 et 8, à hauteur de la traverse 14, et est relié à ces éléments 7, 8, 14 par les moyens de fixation 41. Ce dispositif 30 présente un intérêt lors de l'évolution en terrain particulièrement accidenté et / ou pentu, ou en marches d'escalier, puisqu'il permet alors d'absorber les fortes inégalités, c'est-à-dire de prévenir tout heurt du châssis contre le terrain. En revanche, lorsque le terrain n'est pas ou peu accidenté, ce dispositif n'entrera pas en contact avec lui.

Si, pour la fabrication au moins du châssis, les matériaux les plus divers peuvent être considérés il est bien entendu que l'on retiendra de préférence un matériau qui alliera idéalement qualités mécaniques et légèreté. Citons, à titre d'illustration, l'aluminium, le kevlar, la fibre de verre, mais un matériau synthétique, le bois, le bambou, etc., pourraient trouver application également.

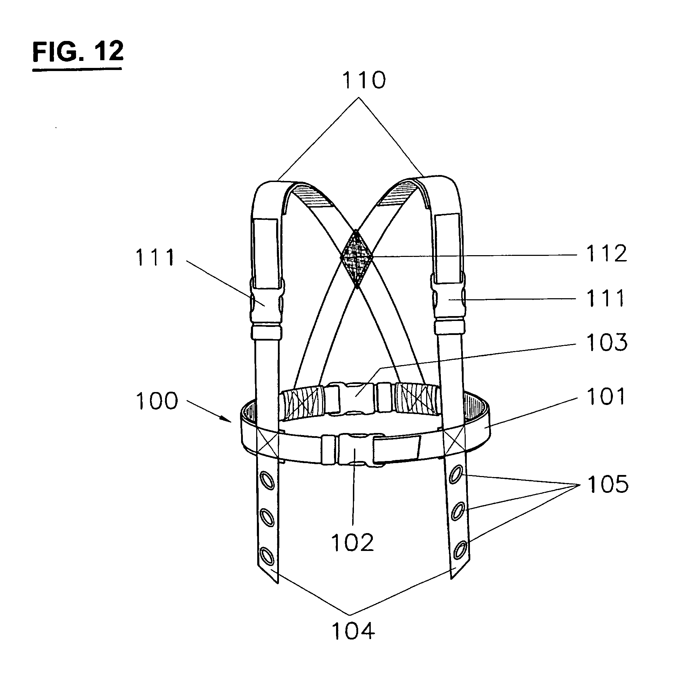

Dans tous les cas, le chariot 1 permet d'être tracté tout en ayant les mains libres, grâce à un dispositif d'attache 100 représenté à la figure 12 (voir aussi figure 13).

Ce dispositif 100 comprend essentiellement une ceinture 101 pourvue, d'une part, de deux sangles latérales 104 ou jarretelles pour la traction du chariot 1, ces sangles comportant des oeillets 105 et, d'autre part, de deux moyens de réglage et de serrage, selon l'exemple une boucle ventrale 102 et une boucle dorsale 103. Ce système de double boucle permet à l'utilisateur d'ajuster non seulement la ceinture à sa taille, mais aussi et surtout les sangles 104 de telle sorte que les centres des oeillets 105 se situent au moins approximativement dans un plan P_{F} (figure 13), ce plan étant formé par les axes des fémurs droit et gauche. Cet ajustement est d'importance pour les raisons explicitées plus haut (voir passages précédant la présentation des figures). Après ajustement correct de la ceinture 101 autour de sa taille, l'utilisateur relie le chariot 1 par ses éléments 9, 10 aux sangles de traction 104 au moyen de mousquetons 106, à une hauteur adaptée à sa taille et qui convient le mieux, c'est-à-dire de telle sorte que les poignées 11, 12 du chariot 1 se trouvent à proximité de ses mains. Ce dispositif d'attache permet de tracter efficacement, et avec un maximum d'aisance et de facilité, le chariot 1 muni de sa charge 16, les composantes de forces - se situant au niveau du bassin de l'utilisateur - ne sollicitant pas le dos de ce dernier. L'utilisateur est libre de tous mouvements mais pourra, au besoin, prendre en main le chariot ou plus simplement poser ses mains sur lesdites poignées.

La ceinture 101 peut être équipée d'une paire de sangles ou bretelles 110 de manière à former un harnais pour un meilleur confort. Ces bretelles, qui peuvent être rembourrées notamment aux endroits où passent les épaules, présentent un croisillon 112 et chacune est pourvue, à l'avant, de boucles de serrage 111.

Grâce à sa conception, le chariot est indéformable, sans sacrifier sa légèreté. Aussi l'utilisateur peut-il le charger aisément et facilement sur son dos, avec la charge 16 qui y est amarrée, en passant par ses épaules les sangles 17 dont cette dernière est munie, lorsque les conditions environnantes l'exigent (figure 14).

## Revendications

1. Dispositif de transport (1) d'une charge comportant un châssis présentant une extrémité supérieure et une extrémité inférieure, cette dernière pourvue d'un dispositif d'appui au sol comprenant au moins un élément portant au moins un élément d'appui au sol, ledit châssis pouvant être relié à un utilisateur au moyen d'un dispositif d'attache, **caractérisé en ce que** le châssis se compose d'une partie inférieure (2) et d'une partie supérieure (3) présentant chacune, vue en plan, au moins approximativement une forme de V, que les branches du V de chaque partie (2,3) d'une part, convergent pour se rejoindre ou se croiser dans une zone où elles sont reliées entre elles, et que d'autre part, à partir de cette zone, elles s'étendent en s'ouvrant au moins sur une distance, à l'opposé les unes des autres, tout ou partie de la charge étant destinée à prendre place dans ladite zone, et que le rapport des hauteurs H₁/H₂ du V de la partie inférieure (2) et de la partie supérieure (3) respectivement est égal à une valeur définie N.

2. Dispositif selon la revendication 1, **caractérisé en ce que** le châssis présente avantageusement la forme générale d'un X asymétrique par rapport à un plan Pᵥ orthogonal aux hauteurs H₁, H₂ et passant par le point de croisement du X, et que le rapport N est avantageusement compris dans un intervalle de valeurs [0.25 - 0.35].

3. Dispositif selon la revendication 1 ou 2, **caractérisé en ce que** le châssis comporte deux longerons, de préférence tubulaires, se croisant en passant l'un par-dessus ou par-dessous l'autre, lesdits longerons étant reliés par un moyen de fixation à l'endroit de leur croisement, et **en ce que** des moyens sont prévus de sorte à assurer un parallélisme entre, d'une part, l'axe de l'élément-support du dispositif d'appui, lequel est agencé aux extrémités des branches du V de la partie inférieure et, d'autre part, une droite rejoignant les extrémités des branches du V de la partie supérieure.

4. Dispositif selon la revendication 3, **caractérisé en ce que** les moyens assurant ledit parallélisme sont formés d'au moins une entretoise.

5. Dispositif selon l'une des revendications 1 à 4, **caractérisé en ce que** l'élément-support du dispositif d'appui est un arbre reliant les extrémités du V de la partie inférieure, que cet arbre est disposé soit de manière alternée, en passant par-dessous et par-dessus respectivement desdites extrémités, soit de manière uniforme en s'étendant ou par-dessous, ou par-dessus ces dernières.

6. Dispositif selon l'une des revendications 1 à 4, **caractérisé en ce que** l'élément-support du dispositif d'appui est formé de deux portions d'arbre d'axe commun et se dégageant de part et d'autre des extrémités du V de la partie inférieure, ces portions d'arbre étant disposées soit de manière alternée, en passant par-dessous et par-dessus respectivement desdites extrémités, soit de manière uniforme en s'étendant ou par-dessous, ou par-dessus ces dernières.

7. Dispositif selon l'une des revendications 1 à 6, **caractérisé en ce que** l'élément d'appui est disposé soit entre les branches du V de la partie inférieure, soit de part et d'autre à l'extérieur desdites branches, et **en ce que** l'élément d'appui est constitué avantageusement d'au moins une roue ou d'au moins un patin de ski.

8. Dispositif selon l'une des revendications 1 à 7, **caractérisé en ce que** les longueurs des deux longerons sont réglables et modifiables, les branches du V de la partie supérieure comportant des éléments télescopiques.

9. Dispositif selon l'une des revendications 1 à 8, **caractérisé en ce que** le châssis comporte au moins une, de préférence deux traverses disposées de part et d'autre de l'endroit de convergence ou de croisement des parties inférieure et supérieure.

10. Dispositif selon la revendication 9, **caractérisé en ce qu**'il comporte des moyens, avantageusement au moins une entretoise pour assurer un parallélisme des axes des traverses.

11. Dispositif selon la revendication 9 ou 10, **caractérisé en ce que** les traverses remplissent une double fonction de renforcement du châssis et de délimitation privilégiée d'une assise pour la charge à transporter, des sangles pouvant être prévues pour arrimer celle-ci.

12. Dispositif selon l'une des revendications 1 à 11, **caractérisé en ce qu**'il comporte une nacelle rattachée aux longerons et couvrant la zone de croisement de ces derniers.

13. Dispositif selon l'une des revendications 9 à 12, **caractérisé en ce qu**'il comporte un dispositif supplémentaire de protection et d'absorption de chocs agencé sous les longerons et de préférence à hauteur de la traverse inférieure, ce dispositif de protection comprenant avantageusement une roulette montée folle sur un arbre.

14. Dispositif de transport selon l'une quelconque des revendications 1 à 13 **caractérisé en ce que** un utilisateur peut s'y relier au moyen d'un dispositif d'attache comprenant une ceinture pourvue, d'une part, de sangles latérales de traction auxquelles peut être suspendu le dispositif de transport et, d'autre part, des moyens permettant un ajustement desdites sangles à des positions déterminées.

15. Dispositif de transport selon la revendication 14, **caractérisé en ce que** les moyens d'ajustement sont constitués de deux boucles disposées de préférence, l'une à l'arrière, l'autre à l'avant, ces boucles pouvant dans le même temps exercer une fonction de serrage de la ceinture autour de la taille de l'utilisateur.

16. Dispositif de transport selon la revendication 14 ou 15, **caractérisé en ce que** les sangles de traction comportent des moyens de sorte à permettre un ajustement en hauteur de la partie supérieure du chariot qui leur est rattachée, ces moyens étant constitués de préférence d'oeillets, la liaison entre et ladite partie supérieure et les sangles étant assurée par des mousquetons.

17. Dispositif de transport selon l'une des revendications 14 à 16, **caractérisé en ce que** des bretelles sont reliées à la ceinture de sorte à former avec cette dernière un harnais.

18. Dispositif de transport selon l'une des revendications 14 à 17, **caractérisé en ce que** les bretelles sont croisées et comportent des moyens d'ajustement.

## Claims

1. Device (1) for transporting a load, comprising a chassis having an upper end and a lower end, the latter being provided with a device for its support on the ground comprising at least one element that carries at least one element for support on the ground, the chassis being connectable to a user by means of an attaching device, **characterised in that** the chassis is composed of a lower portion (2) and of an upper portion (3) each having, as seen in a plan view, at least approximately the shape of a V, **in that** the legs of the V of each portion (2, 3) converge to join or cross each other in an area where they are connected to each other, on one hand, and on the other hand, extend from that area and open at least over a distance, opposite each other, all or part of the load being intended to be placed **in that** area, and **in that** the ratio H₁/H₂ of the heights of the V of the lower portion (2) and the upper portion (3), respectively, is equal to a defined value N.

2. Device according to claim 1, **characterised in that** the chassis is advantageously in the general form of an X that is asymmetrical with respect to a plane Pᵥ extending orthogonally to the heights H₁, H₂ and passing through the crossing point of the X, and **in that** the ratio N is advantageously comprised within an interval of values [0.25 - 0.35] .

3. Device according to claim 1 or 2, **characterised in that** the chassis comprises two longitudinal girders, preferably tubular ones, crossing each other while passing one above or underneath the other, the girders being interconnected by a fastening member at the location of their crossing, and **in that** means are provided to ensure a parallelism between the axis of the support element of the supporting device, which is arranged at the ends of the legs of the V of the lower portion, on one hand, and on the other hand, a straight line connecting the ends of the legs of the V of the upper portion.

4. Device according to claim 3, **characterised in that** the means ensuring the parallelism are formed of at least one brace.

5. Device according to one of claims 1 to 4, **characterised in that** the support element of the supporting device is a shaft connecting the ends of the V of the lower portion, and **in that** the shaft is disposed either in an alternating manner, extending underneath and above these ends, respectively, or in an uniform manner, extending either underneath or above the latter.

6. Device according to one of claims 1 to 4, **characterised in that** the support element of the supporting device is formed of two shaft portions having a common axis that are projecting on either side from the ends of the V of the lower portion, these shaft portions being disposed either in an alternating manner, extending underneath and above these ends, respectively, or in an uniform manner, extending either underneath or above the latter.

7. Device according to one of claims 1 to 6, **characterised in that** the supporting element is disposed either between the legs of the V of the lower portion, or on either side on the outside of the legs, and **in that** the supporting element is advantageously constituted by at least one wheel or at least one ski.

8. Device according to one of claims 1 to 7, **characterised in that** the lengths of the two girders are adjustable and variable, the legs of the V of the upper portion comprising extensible members.

9. Device according to one of claims 1 to 8, **characterised in that** the chassis comprises at least one, preferably two cross members disposed on both sides of the convergence or crossing location of the lower and upper portions.

10. Device according to claim 9, **characterised in that** it comprises means, advantageously at least one brace, for ensuring a parallelism of the axes of the cross members.

11. Device according to claim 9 or 10, **characterised in that** the cross members serve a double function of reinforcing the chassis and of demarcating a privileged area of a seat for the transported load, straps being possibly provided for securing the same.

12. Device according to one of claims 1 to 11, **characterised in that** it comprises a basket attached to the girders and covering the crossing area of the same.

13. Device according to one of claims 9 to 12, **characterised in that** it comprises an additional protection and shock absorbtion device arranged underneath the girders and preferably at the height of the lower cross member, the protecting device advantageously comprising a roller freewheeling on a shaft.

14. Transport device according to any one of claims 1 to 13, **characterised in that** a user can connect thereto by means of an attaching device provided, on one hand, with lateral pulling straps to which the transport device may be suspended and, on the other hand, with means allowing an adjustment of the straps in determined positions.

15. Transport device according to claim 14, **characterised in that** the adjusting means are composed of two buckles that are preferably disposed one at the back and the other one on the front side, these buckles simultaneously providing a function in tensioning the belt around the waist of the user.

16. Transport device according to claim 14 or 15, **characterised in that** the pulling straps comprise means so as to allow a height adjustment of the upper portion of the carriage that is connected thereto, these means being preferably constituted by lugs and the connection between the upper portion and the straps being provided by spring hooks.

17. Transport device according to one of claims 14 to 16, **characterised in that** suspenders are connected to the belt so as to form a harness therewith.

18. Transport device according to one of claims 14 to 17, **characterised in that** the suspenders are crossed and comprise adjusting means.

## Patentansprüche

1. Transportvorrichtung (1) für eine Last, mit einem Gestell mit einem oberen Ende und einem unteren Ende, wovon letzteres eine Vorrichtung zur Abstützung auf dem Boden mit mindestens einem Bestandteil aufweist, der mindestens ein Element zur Abstützung auf dem Boden trägt, wobei das Gestell mittels einer Befestigungsvorrichtung mit einem Benutzer verbindbar ist,
**dadurch gekennzeichnet, dass** das Gestell aus einem Unterteil (2) und einem Oberteil (3) besteht, welche im Grundriss gesehen jeweils mindestens annähernd V-förmig sind, dass die V-Schenkel der beiden Teile (2, 3) einerseits jeweils zusammenlaufen, um sich in einem Bereich, wo sie miteinander verbunden sind, zu treffen oder zu kreuzen und sich andererseits von diesem Bereich aus jeweils in entgegengesetze Richtungen erstrecken und mindestens über eine bestimmte Strecke öffnen, wobei die ganze Last oder ein Teil davon im genannten Bereich zu liegen kommt, und dass das Höhenverhältnis H₁/H₂ zwischen dem V des Unterteils (2) und demjenigen des Oberteils (3) einem bestimmten Wert N entspricht.

2. Vorrichtung nach Anspruch 1, **dadurch gekennzeichnet, dass** das Gestell vorteilhaft die allgemeine Form eines bezüglich einer senkrecht zu den Höhen H₁, H₂ stehenden und durch den Kreuzungspunkt des X verlaufenden Ebene Pᵥ asymmetrischen X aufweist, und dass das Verhältnis N vorteilhaft in einem Wertebereich [0.25 - 0.35] liegt.

3. Vorrichtung nach Anspruch 1 oder 2, **dadurch gekennzeichnet, dass** das Gestell zwei bevorzugt rohrförmige Längsträger aufweist, welche sich über- oder unterkreuzen und am Kreuzungspunkt durch ein Befestigungsmittel miteinander verbunden sind, und dass Mittel vorgesehen sind, um die Parallelität zwischen der Achse der Halterung für die Stützvorrichtung, welche an den Enden der V-Schenkel des Unterteils angebracht ist, einerseits und andererseits einer Gerade, welche die Enden der V-Schenkel des Oberteils miteinander verbindet, zu gewährleisten.

4. Vorrichtung nach Anspruch 3, **dadurch gekennzeichnet, dass** die Mittel zur Gewährleistung besagter Parallelität aus mindestens einer Strebe bestehen.

5. Vorrichtung nach einem der Ansprüche 1 bis 4, **dadurch gekennzeichnet, dass** die Halterung der Stützvorrichtung eine Achse ist, die die V-Enden des Unterteils verbindet, und dass diese Achse entweder abwechselnd unterhalb bzw. oberhalb besagter Enden verlaufend angeordnet ist oder einheitlich unterhalb oder oberhalb derselben.

6. Vorrichtung nach einem der Ansprüche 1 bis 4, **dadurch gekennzeichnet, dass** die Halterung der Stützvorrichtung aus zwei Teilachsen auf derselben Achse besteht, die auf beiden Seiten an den V-Enden des Unterteils herausragen, wobei diese Teilachsen entweder abwechselnd unterhalb bzw. oberhalb besagter Enden verlaufend angeordnet sind oder einheitlich unterhalb oder oberhalb derselben.

7. Vorrichtung nach einem der Ansprüche 1 bis 6, **dadurch gekennzeichnet, dass** das Stützelement entweder zwischen den V-Schenkeln des Unterteils oder auf beiden Seiten ausserhalb besagter Schenkel angeordnet ist, und dass das Stützelement vorteilhaft aus mindestens einem Rad oder mindestens einer Skikufe besteht.

8. Vorrichtung nach einem der Ansprüche 1 bis 7, **dadurch gekennzeichnet, dass** die Länge der beiden Längsholme jeweils einstellbar und veränderbar ist, wobei die V-Schenkel des Oberteils ausziehbare Teile aufweisen.

9. Vorrichtung nach einem der Ansprüche 1 bis 8, **dadurch gekennzeichnet, dass** das Gestell mindestens eine, bevorzugt zwei Querstreben aufweist, welche auf beiden Seiten der Stelle angeordnet sind, wo der Unterteil und der Oberteil zusammenlaufen oder sich kreuzen.

10. Vorrichtung nach Anspruch 9, **dadurch gekennzeichnet, dass** sie Mittel aufweist, bevorzugt mindestens eine Strebe, um die Parallelität der Achsen der Querstreben zu gewährleisten.

11. Vorrichtung nach Anspruch 9 oder 10, **dadurch gekennzeichnet, dass** die Querstreben gleichzeitig als Verstärkung des Gestells und als bevorzugte Begrenzung einer Auflage für die zu transportierende Last dienen, wobei Riemen zum Festbinden derselben vorgesehen sein können.

12. Vorrichtung nach einem der Ansprüche 1 bis 11, **dadurch gekennzeichnet, dass** sie einen Korb aufweist, der an den Längsholmen befestigt ist und den Kreuzungsbereich derselben überdeckt.

13. Vorrichtung nach einem der Ansprüche 9 bis 12, **dadurch gekennzeichnet, dass** sie eine zusätzliche Schutz- und Stossabsorptionsvorrichtung aufweist, welche unter den Längsholmen und bevorzugt auf der Höhe der unteren Querstrebe angeordnet ist, wobei diese Schutzvorrichtung vorteilhaft eine frei auf einer Achse laufende Rolle beinhaltet.

14. Transportvorrichtung nach einem der Ansprüche 1 bis 13, **dadurch gekennzeichnet, dass** ein Benutzer sich mittels einer Befestigungsvorrichtung mit derselben verbinden kann, welche einerseits seitliche Zugriemen aufweist, an welchen die Transportvorrichtung aufgehängt werden kann, und andererseits Mittel zur Einstellung besagter Riemen in bestimmten Stellungen.

15. Transportvorrichtung nach Anspruch 14, **dadurch gekennzeichnet, dass** die Einstellmittel aus zwei Schnallen bestehen, von welchen bevorzugt die eine hinten und die andere vorne angeordnet ist, und welche Schnallen gleichzeitig zum Festziehen des Gürtels um die Taille des Benutzers dienen.

16. Transportvorrichtung nach Anspruch 14 oder 15, **dadurch gekennzeichnet, dass** die Zugriemen Mittel zur Höhenverstellung des daran befestigten Wagenoberteils aufweisen, welche Mittel vorzugsweise aus Ösen bestehen, wobei die Verbindung zwischen besagtem Oberteil und den Riemen durch Karabinerhaken erfolgt.

17. Transportvorrichtung nach einem der Ansprüche 14 bis 16, **dadurch gekennzeichnet, dass** Schulterriemen mit dem Gürtel verbunden sind und mit demselben ein Geschirr bilden.

18. Transportvorrichtung nach einem der Ansprüche 14 bis 17, **dadurch gekennzeichnet, dass** die Schulterriemen gekreuzt sind und Einstellmittel aufweisen.
